# EUROPEAN PATENT APPLICATION

(11) **EP 2 974 597 A1**
(43) Date of publication of application: **20.01.2016**
(21) Application number: 15176661.5
(22) Date of filing: 14.07.2015
(51) Int. Cl.: A01K 27/00

(54) **ANIMAL VEST AND CAMERA MOUNT**

(30) Priority: 15.07.2014 US 201462024799 P; 13.07.2015 US 201514797725
(71) Applicant: RA BRANDS, L.L.C., Madison, NC 27025 (US)
(72) Inventor: WATSON, Jason Timothy, Charlotte, NC North Carolina 28205 (US); MOORE, Heyward Alexander, Charlotte, NC North Carolina 28203 (US)
(74) Representative: Hofstetter, Schurack & Partner

(57) **Abstract**

The disclosure generally relates to a canine vest (2), and a mounting system (4) for mounting a device, such as camera (C), to the canine vest. The mounting system can include two mounting bases (6A,6B) and a mounting plate (8). Each mounting base can include both a first attachment portion configured for at least partially securing the mounting base to the canine vest, and a second attachment portion configured for at least partially securing the mounting base to the mounting plate.

## Description

### Cross Reference to Related Application

The present Patent Application is a formalization of previously filed, co-pending United States Provisional Patent Application Serial No. 62/024,799, filed July 15, 2014 by the inventors named in the present Application. This Patent Application claims the benefit of the filing date of this cited Provisional Patent Application according to the statutes and rules governing provisional patent applications, particularly 35 U.S.C. § 119(e), and 37 C.F.R. §§ 1.78(a)(3) and 1.78(a)(4). The specification and drawings of the Provisional Patent Application referenced above are specifically incorporated herein by reference as if set forth in their entirety.

### Field of Disclosure

The present disclosure generally relates to an animal vest and article mounting system therefor, and, more specifically, to a canine tactical vest and a mounting system that enables articles such as a camera to be easily added to or removed from the vest, and which provides an enhanced stability platform for operation of the camera.

### Background of Invention

Military units and police departments train dogs to be used in numerous diverse types of missions ranging from search and rescue to reconnaissance. In such missions, the dogs may be sent into dangerous circumstances or places that are difficult for human beings to enter. To allow human beings to have a visual without entering such areas, the dogs may be fitted with a vest carrying a camera, for capturing visual images and video. The visual images and video captured from the camera may be transmitted to a monitor and/or stored for use in various other applications. Many canine vests that currently exist typically have a proprietary integrated camera and vest system that generally does not allow for cameras to be interchanged, such as to enable different views, or for the reconfiguration or reorientation of the camera. Therefore, if a handler has an issue with either the vest or the camera, the system can be compromised. Further, in some missions, the dogs are hoisted by ropes into buildings or parachuted into enemy territory. When the dog is suspended, the weight of the camera and any other equipment mounted to the vest can substantially increase the force exerted on the chest area of the dog, causing discomfort and possible injury. Also, such increased forces exerted on the vest may cause the vest to unzip and detach from the dog.

Consequently, there exists a need for a vest that can be used with animals and which may optionally include an easily interchangeable camera mounting system that allows for easy substitution and use of multiple cameras and/or other devices, and which addresses the foregoing and other related and unrelated problems in the art.

### Summary of Disclosure

The present invention is directed to canine vest with the features of claim 1.

In another aspect, the present disclosure is generally directed to a mounting system for a vest for use with animals, such as a tactical vest for canines. In some examples, the vest can be used without the mounting system, as will be discussed in greater detail below.

In one embodiment, the mounting system can comprise an elongated structure, wherein the elongated structure includes a mounting platform supported by mounting bases secured at spaced locations along the vest. Each of the mounting bases generally can include a body with a first side portion, a second side portion, and a center portion defined between the first side portion and the second side portion.

Each mounting base can further include a first or lower attachment part or portion configured to be at least part of a connection between the mounting base and the canine vest. For example, the lower attachment part can be configured for receiving and/or coupling to a strap or other feature to integrate and/or secure the mounting base to the vest. As a more specific example, the lower attachment part of the mounting base can comprise a slot and/or clip or other connector formed and/or located along the mounting base.

Each mounting base can further include at least one second or upper attachment part configured to comprise at least part of a connection between the mounting base and the mounting platform. In one example embodiment, as at least a portion of the upper attachment part, each mounting base can include a connector and/or a bridge arm. For each mounting base, its bridge arm can span the center portion of the body of the mounting base, so that the bridge arm generally extends from the first side portion of body of the mounting base to the second side portion of body of the mounting base. The bridge arm can be pivotally connected to one of the side portions and can have a releasable locking mechanism that engages the other side portion of its mounting base.

The mounting platform of the mounting system can be a longitudinally extending support or mounting plate configured to receive and securely hold at least one selected device, such as a camera, in a desired orientation or alignment. In one embodiment, the mounting plate will have opposite attachment parts configured to be a least parts of releasable connections with the upper attachment parts of the mounting bases. Each of the attachment parts of the mounting plate also can comprise a mating portion adapted to engage and mate with respective portions of the mounting bases. For example, each mating portion of the mounting plate can comprise one or more recesses or receiving holes for selectively mating with connectors of the mounting bases.

Once located on the mounting bases, the mounting plate can be secured to the mounting bases and the vest by moving the bridge arms to a closed position, wherein the bridge arms can clamp or otherwise substantially securely hold the mounting plate against the mounting bases, in a manner sufficient to substantially prevent the mounting plate from being dislodged from its mating engagement with the mounting bases and/or otherwise shifting or moving to an extent that a camera mounted thereon is moved out of its desired orientation. Thereafter, when the bridge arms are moved to their open position, the mounting plate can easily be removed, reoriented and/or changed out, enabling rapid, easy changing of the camera or other device carried by the mounting plate.

Another aspect of the disclosure is directed to an animal vest, such as a canine tactical vest, having an integrated mounting system for attachment of devices, such as a camera, in a substantially stable, secure and focused orientation along the vest. The mounting system can comprise a first mounting base and a second mounting base, each having a body with, or mounted to, a first attachment portion or part configured for securing the mounting bases to the vest.

Each mounting base can further include at least one second attachment part configured for connecting the mounting base and a mounting plate of the mounting system. The second attachment part of each mounting base can comprise a connector for receiving a corresponding mating portion of the mounting plate, and adapted to engage and mate therewith to locate and attach the mounting plate to the mounting bases.

The vest can comprise a body generally formed of a flexible, substantially durable material. The body of the vest, and any sections thereof, can have opposite front (e.g., first or fore) and rear (e.g. second or aft) ends. The vest body can have upper and lower sections that are releasably connectable to one another and configured for facilitating efficient instillation of the vest onto a canine. In one embodiment, the upper section can have a first side portion including a portion of a first side connector extending therealong, and a second side portion including a portion of a second side connector extending therealong. The side connectors can include zippers, hook and loop fasteners, snaps, and/or other suitable releasable connectors. The upper section of the vest body further comprises a center portion defined between the first and second side portions. The first mounting base and the second mounting base can be securely attached to the center portion.

In some examples, the lower section of the vest body can be referred to as a harness or leg harness. The harness can comprise a harness body with leg openings defined on opposite sides of a chest section. The chest section and upper section of the vest body further define a front opening therebetween. The front opening is configured for having a forward portion (e.g., neck) of the animal extend therethrough. The harness also can be removably attached to the upper section of the vest body by the first and second side connectors.

The vest body and the openings thereof further can comprise adjustment features so as to be easy to resize and and/or enable replacement of the vest body sections and/or reorientation of components mounted thereon as needed. In addition, the vest generally can be at least partially formed of a bullet resistant material, including various protective materials such as Trelleborg brand or Kevlar brand fabric materials, and can include a reinforced, padded chest area. In addition, the vest can include no-backout holding features to minimize the chances of the side connectors or zippers accidentally opening during an operation such as when the animal is running or is being hoisted or descending. Other features, such as straps, D-rings, hooks, handles and/or other connectors also can be provided along the vest body.

One aspect of this disclosure is the provision of a canine vest comprising a body having upper and lower sections; a first connector configured to connect a first side portion of the upper section to a first side portion of the lower section; and a second connector configured to connect a second side portion of the upper section to a second side portion of the lower section; wherein at least one section selected from the group consisting of the upper section and the lower section can comprise first and second pieces of fabric that each extend in a lengthwise direction of the canine vest, and a lengthwise connection between the first and second pieces of fabric, wherein the second piece of fabric can have greater elasticity than the first piece of fabric. The connection between the first and second pieces of fabric can comprise a sewn seam.

The lower section can include the first and second pieces of fabric or straps, and the lower section can further include a third piece of fabric or a strap extending in a lengthwise direction, and a lengthwise connection between the first and third pieces of fabric, wherein the third piece of fabric can have greater elasticity than the first piece of fabric. The first connector can be a zipper connected to the second piece of fabric by a sewn seam, and second connector can be a zipper connected to the third piece of fabric by a sewn seam.

Another aspect of this disclosure is the provision of a canine vest having a body configured to extend around a main cavity configured to receive at least a portion of a torso of a canine, wherein the body can define openings to the main cavity for respectively having portions of the canine extend outwardly therethrough. In one example, one of the openings can be a rearward lower opening that is positioned between at least one lower leg opening of the vest and a rear opening of the vest, wherein the rearward lower opening can be at least partially defined by a distal edge of a base fabric of the body, and the cut edge can extend at least partially around the rearward lower opening. The base fabric can be a polymeric coated fabric, and the distal edge can be an unseamed, cut edge of the polymeric coated fabric, such that at least one fabric of the vest can be configured so that its edges do not require seaming, or the like, to restrict unraveling of the fabric. One or more of the openings in the body of the vest further can be configured/adapted to be readily enlarged, such as by cutting, without the newly cut edges generally requiring seaming, coating, or the like, to restrict unraveling of the fabric.

The present invention is further directed to a mounting system for a canine vest according to the following points:
1. A mounting system for a canine vest, the mounting system comprising:
   at least one mounting base comprising an attachment part configured to be part of a connection between the least one mounting base and the canine vest, and an arm extending at least partially across a body of the least one mounting base; and a mounting plate configured to receive and support a selected device in a desired orientation, the mounting plate being adapted to engage and mate with the at least one mounting base; wherein the arm is movable between an open position and a closed position, wherein in the closed position, the arm engages the mounting plate against the at least one mounting base so as to substantially secure the mounting plate against dislocation from its mating engagement with the at least one mounting base.
   2. The mounting system of point 1, wherein the body of the at least one mounting base comprises a first side portion, and a second side portion; and wherein the arm of the at least one mounting base is pivotally connected to the body of the at least one mounting base, and includes a releasable locking mechanism configured to secure the arm to the second side portion of the base of the at least one mounting base when the arm is in its closed position.
   3. The mounting system of point 2, wherein the at least one mounting base comprises a first mounting base and a second mounting base; the mounting plate has opposite first and second end portions; the first end portion of the mounting plate is adapted to engage and mate with the first mounting base; and the second end portion of the mounting plate is adapted to engage and mate with the second mounting base.
   4. The mounting system of point 1, wherein the canine vest comprises a vest body of a flexible, substantially durable material, including: an upper section comprising a first side portion and a second side portion, and a harness portion having leg openings defined therein and a chest section, the chest section of the harness portion and the upper section defining a torso opening therebetween.
   5. The mounting system of point 4, wherein the canine vest comprises a first connector, a second connector, a first T-bar and a second T-bar; the upper section is removably attached to the harness portion by the first connector and the second connector; the first connector comprises a first loop configured to mate with the first T-bar; and the second connector comprises a second loop configured to mate with the second T-bar.
   6. The mounting system of point 5, wherein the first connector comprises a first zipper, and the first loop is configured to mate with the first T-bar to restrict the first zipper from unzipping; and the second connector comprises a second zipper, and the second loop is configured to mate with the second T-bar to restrict the second zipper from unzipping.
   7. The mounting system of point 6, wherein the vest body further comprises a first flap along the first side portion and a second flap along the second side portion so as to substantially prevent obstruction of the first and second zippers when the harness portion is attached to the upper section.
   8. The mounting system of point 4, wherein the canine vest comprises polymeric coated fabric with at least one unseamed edge.
   9. The mounting system of point 4, wherein the chest section of the harness portion comprises a padded chest section.
   10. The mounting system of point 4, wherein the canine vest further comprises a first handle connected adjacent a front portion of the vest body, and a second handle connected adjacent a rear portion of the vest body.
   11. The mounting system of point 1, wherein said base comprising said base body defining a gap spanning between first and second side portions of the base body; said arm having first and second end portions, the first end portion being pivotably mounted to the first side portion of the base body so that the arm is pivotable between said open position and said closed position with respect to the base body, wherein in the closed position the arm extends across the gap, and wherein the arm and the base body are cooperatively configured to at least partially engage an article received therebetween; and a releasable locking mechanism configured to secure the second end portion of the arm to the second side portion of the base body when the arm is in the closed position.
   12. The mounting system of point 11, wherein the base comprises at least one slot configured to receive a strap for connection of the base to a vest body.
   13. The mounting system of point 12, wherein the slot is at least partially defined by a clip.
   14. The mounting system of point 12, wherein the slot is at least partially defined by a cross member.

Additional features, advantages, and embodiments of the disclosure may be set forth or apparent from consideration of the following detailed description, drawings, and claims. Moreover, it is to be understood that both the foregoing summary of the disclosure and the following detailed description are exemplary and intended to provide further explanation without limiting the scope of the invention.

### Brief Description of the Drawings

The accompanying drawings, which are included to provide a further understanding of the disclosure, are incorporated in and constitute a part of this specification, illustrate embodiments of the disclosure, and together with the detailed description, serve to explain the principles of the disclosure. No attempt is made to show structural details of the disclosure in more detail than may be necessary for a fundamental understanding of the disclosure and the various ways in which it may be practiced. In addition, it will be understood by those skilled in the art that the embodiments of the disclosure and the various features thereof discussed below are explained in detail with reference to non-limiting embodiments and examples that are described and/or illustrated in the accompanying drawings. It should be noted that the features illustrated in the drawings are not necessarily drawn to scale, and features of one embodiment may be employed with other embodiments as the skilled artisan would recognize, even if not explicitly stated herein. Descriptions of certain components and processing techniques may be omitted so as to not unnecessarily obscure the embodiments of the disclosure.
Fig. 1A is a front perspective view of one example embodiment of a vest and a mounting system attached to the vest.
Fig. 1B is a rear perspective view of the vest and the mounting system of Fig. 1A.
Fig. 1C is a top perspective view of the vest and the mounting system of Fig. 1A.
Fig. 1D is a perspective view illustrating the vest and the mounting system of Fig. 1A being worn by a dog and supporting a camera.
Fig. 2A is a perspective view of one embodiment of a mounting system.
Fig. 2B is a top view of the mounting system of Fig. 1A.
Fig. 3A is a perspective view of a lower portion of a mounting base of the mounting system of Fig. 2A.
Fig. 3B is a top view of one embodiment of a mounting plate.
Fig. 4A is a perspective view of one embodiment of the mounting base in the closed configuration.
Fig. 4B is a perspective view of one embodiment of the mounting base in the open configuration.
Fig. 5 is a partially exploded, side perspective view of the mounting system and a camera system, in accordance with one embodiment.
Fig. 6 is a side perspective view of the camera system mounted to the mounting system of Fig. 5, wherein the camera system is in an open configuration.
Fig. 7A is a top plan view of one embodiment of an upper section of a vest.
Fig. 7B is a bottom view of the upper section of Fig. 7A.
Fig. 8 illustrates upper and lower sections of a vest separated from one another, in accordance with an embodiment.
Fig. 9 is a side perspective view of one embodiment of a lower section of a vest.
Fig. 10 is a schematic, side cross-sectional view of a representative base body of a mounting base mounted to a portion of a vest, in accordance with an embodiment.
Fig. 11A is a bottom perspective view of another embodiment of a mounting system.
Fig. 11B is a front elevation view of the mounting system of Fig. 10A.

### Detailed Description

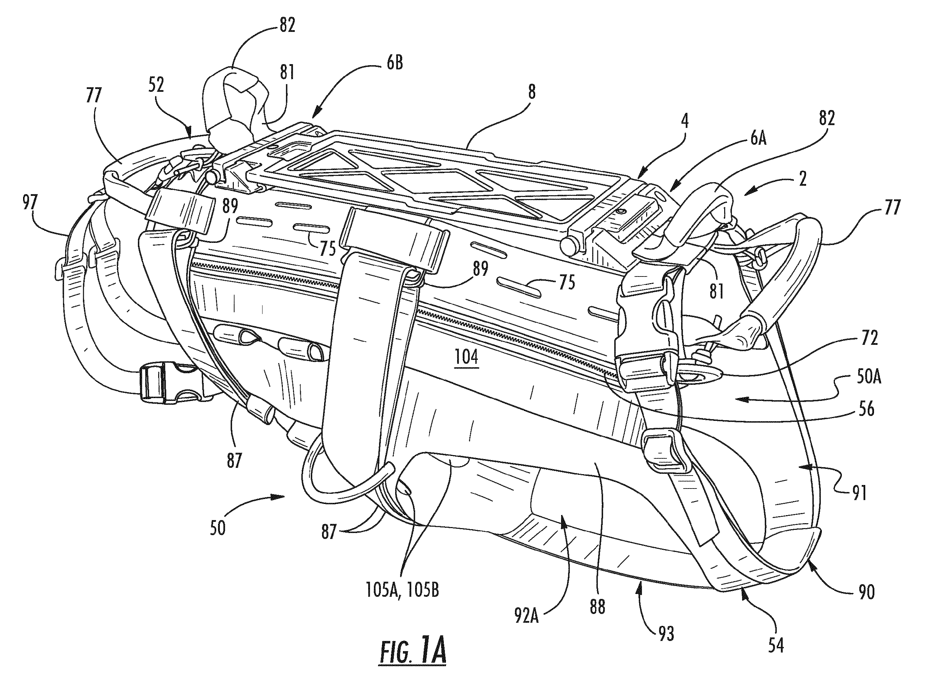

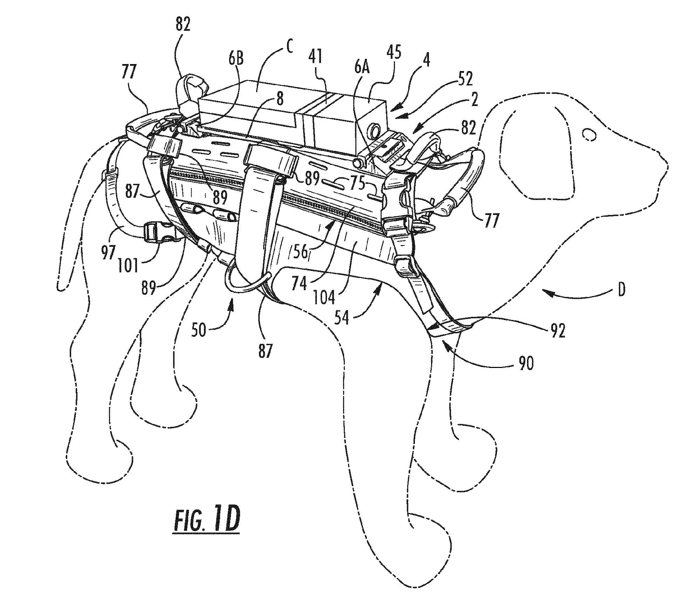

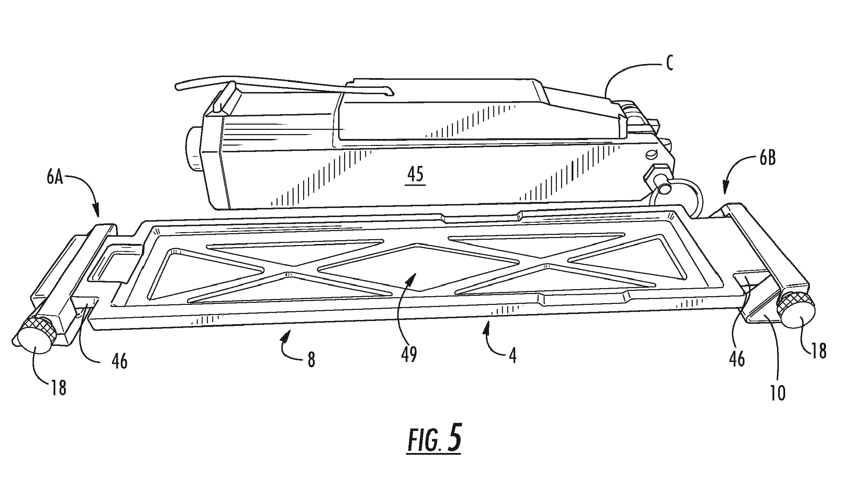

Referring now to the drawings, in which like numerals indicate like parts throughout the several views, Figs. 1A-1D illustrate a vest 2 with a universal mount system 4 integrated with or otherwise securely affixed thereto. For illustrative purposes only and not to limit the scope of the disclosure, a canine tactical vest 2 with a universal mount system 4 for use in mounting a camera C (Figs. 1D, 5 and 6) or similar device to the animal vest will be described herein. However, the vest 2 can be configured to fit other and/or varying size animals, and/or persons without departing from the scope of the disclosure. Further, the universal mount system 4 is not limited solely to use with the illustrated embodiments of a vest 2; for instance the mount system 4 may be attached to a vehicle, a tripod, a wall or any other suitable surface. As another example, the vest 2 can be used without the mount system 4.

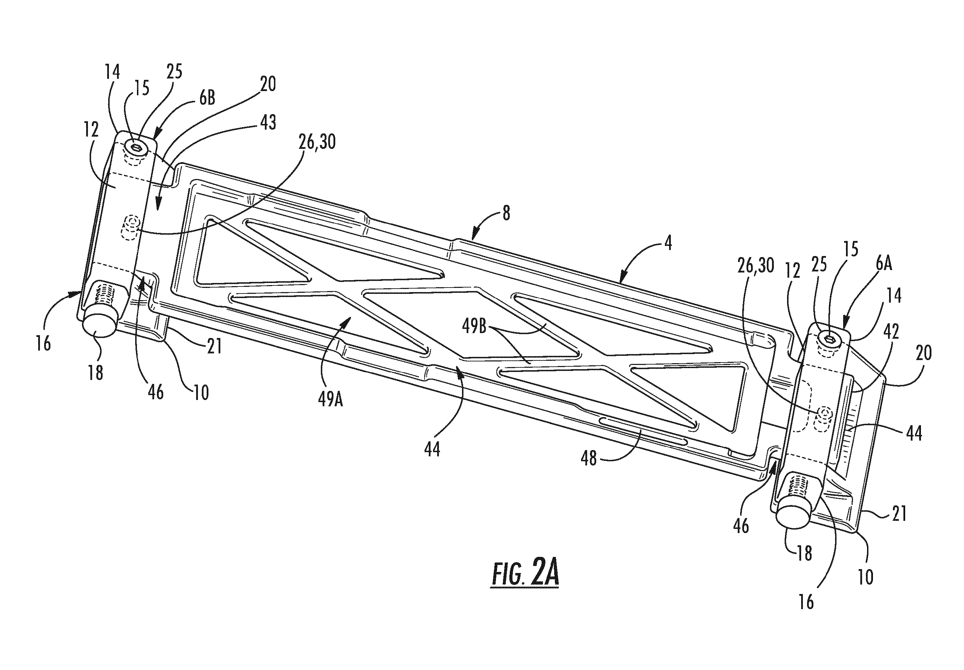

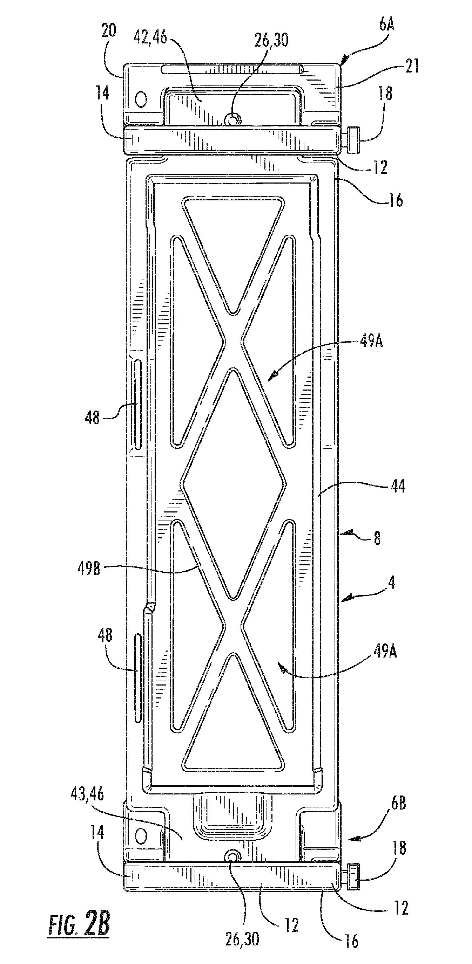

In one embodiment illustrated, for example, in Figs. 1A-1D, 2A, 2B, 5 and 6, the universal mount system 4 can include an elongated structure comprising a pair of mounting bases 6A, 6B removably secured to a support, mounting platform, or mounting plate 8. As illustrated in Figs. 2A and 2B, the mounting bases 6A, 6B generally can be substantially identical, although variations in and between the mounting bases are within the scope of this disclosure. For example, Figs. 2A and 2B illustrate different embodiments of the mounting bases 6A, 6B, as discussed in greater detail below.

Referring for example to Fig. 2A, each mounting base 6A, 6B can have a lower portion or base body10, and an upper portion or attachment part 12 coupled to the base body 10. The upper attachment part 12 can be or comprise a bridge arm 12 that can span or extend substantially across, or at least partially across, the width of the base body 10. The bridge arm 12 can be removably or movably mounted to the base body 10, such as by being pivotally attached to the base body. Each bridge arm 12 can have a first end 14 that has one or more fastener openings 25 in which fasteners, such as a shoulder bolt 15, or the like, can extend and engage the base body 10, thus creating a pivot point or hinged coupling. Depending on the orientation of the fastener opening 25 that is so engaged, the bridge arm 12 can be pivoted about its pivot point in a vertical direction (e.g., see Fig. 2B) or a horizontal direction (see Fig. 2A). More specifically, in the embodiment of the mounting bases 6A, 6B shown in Fig. 2A, the bridge arms 12 are mounted to the base bodies for pivoting generally horizontally, whereas in the embodiments shown, for example, in Figs. 1A-1D, 2B, 3A and 4A-6, the bridge arms 12 are mounted to the base bodies for pivoting generally horizontally.

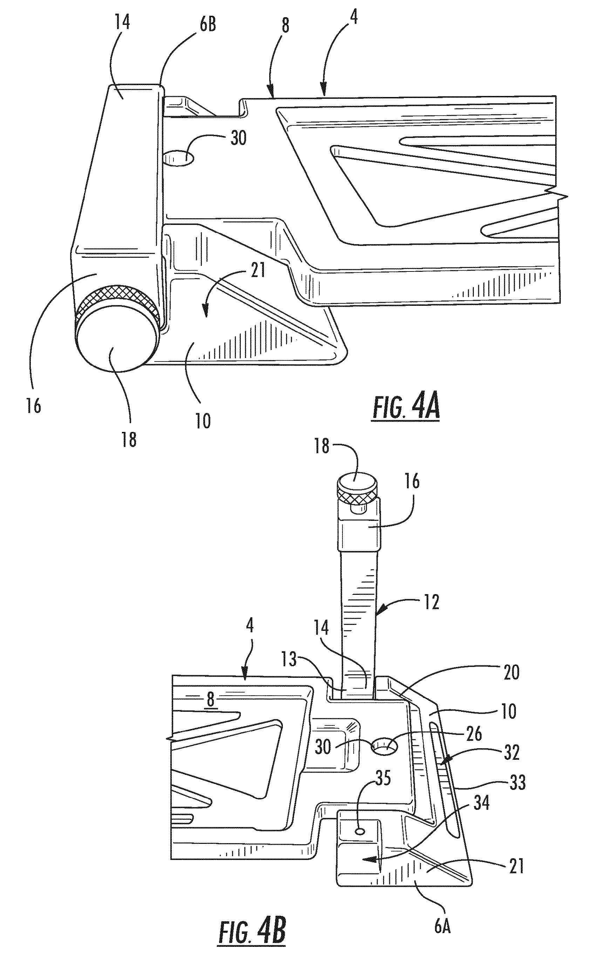

Referring for example to Fig. 4B, each bridge arm 12 also has a second end 16 that can be associated with or include a fastening or locking mechanism 18 for securely and releasably holding the bridge arm 12 in a closed or fastened position. For example, the locking mechanism 18 can be a spring loaded pressure bolt, a quick release pin or any other suitable feature for releasably holding the bridge arm 12 in the closed position as will be understood by those skilled in the art. The second side portion 21 of the lower portion of base body 10 of each mounting base 6A, 6B also can have a cutout section or other suitable recess 34 for receiving a protrusion formed in the second end 16 of the bridge arm 12. The second side portion 21 of each base body 10 can also include a circular cutout or other suitable hole 35 for receiving the inner end of the fastener or release pin 18 when the bridge arm 12 is positioned in the closed configuration.

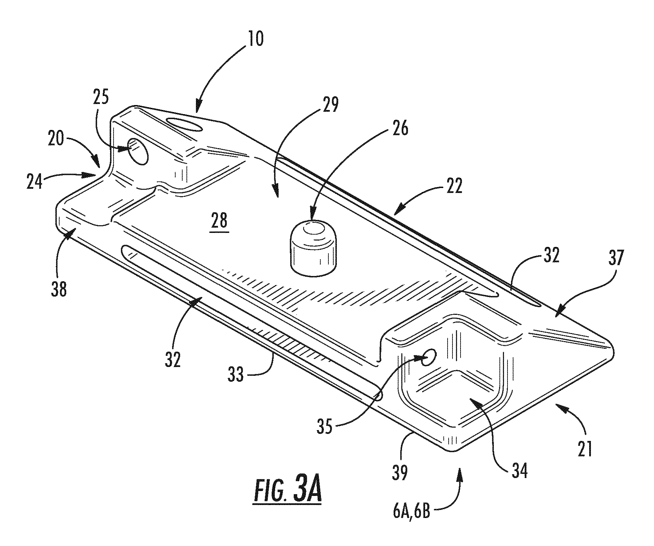

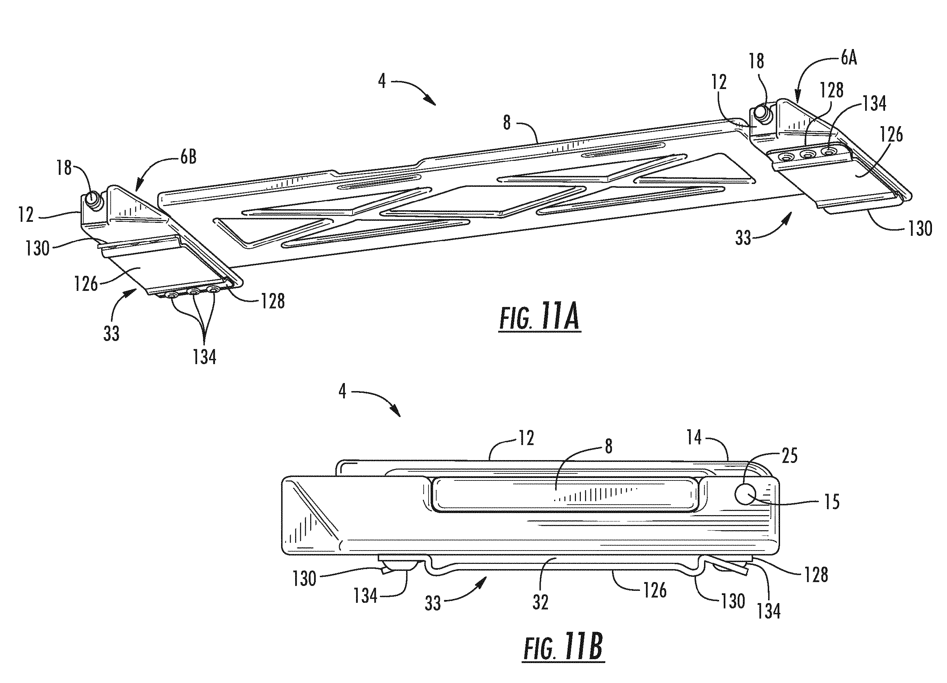

As further illustrated in Fig. 3A, in one embodiment, the base body 10 of each mounting base 6A, 6B comprises a first side portion 20, a second side portion 21 and a center portion 22 between the first and second side portions 20, 21. The first side portion 20 can include a cutout portion or other suitable recess 24 for receiving the first end 14 (Figs. 4B and 11B) of the bridge arm 12 in a substantially nested or low-profile alignment or fit. The base body 10 can further include a fastener opening 25 that is open at the recess 24 for receiving the shoulder bolt 15. In Fig. 3A the fastener opening 25 extends substantially horizontally in a protrusion of the base body 10, whereas in Fig. 2A the fastener openings 25 extend substantially vertically. As shown in Fig. 3A, the center portion 22 further may have a connector or connector part, such as a protrusion that can be in the form of a post 26, positioned generally centrally along the center portion. The connector post 26 can extend upwardly from a laterally extending, upper surface 28 of the center portion 22. The connector post 26 can extend upwardly into a receptacle or gap 29 defined between upright portions or protrusions of the side portions 20, 21 of the base body 10. The connector or connector post 26 generally will be configured to mate with a corresponding receiver aperture or recess 30 in the mounting plate or platform 8 (as indicated in Figs. 2A, 2B and 4B) to facilitate the alignment and mounting of the mounting plate 8 in place, and can help prevent the mounting plate 8 from moving in an axial direction out of a desired alignment.

With continued reference to Fig. 3A, each mounting base 6A, 6B can further include a lower attachment portion or part 32 configured to be at least part of a connection between the mounting base and the vest 2. In one embodiment, the attachment portion 32 can be in the form of an opening or hole, or more specifically a slot 32 (or a series of slots). For each mounting base 6A, 6B, the slot 32 can extend laterally between, and be closed at each of, the first and second side portions of 20, 21 of the base 10. In contrast, each slot 32 can extend longitudinally between, and be open at each of, the front and rear ends of its base body 10. The slot 32 can be configured to allow a portion of the vest 2, for example a strap, cord, plate, or other attachment part or connecting feature of the vest, to pass therethrough to secure each mounting base 6A, 6B to the vest. The slot 32, or a series of slots, can be sized and configured for use with straps, cords, or other connectors of a vest 2 with which the mounting bases 6A, 6B are used. The mounting base 6A, 6B thus can be securely but removably mounted to the vest, and in some embodiments further can be fixedly secured to the vest by sewing, adhesives, or other features. Thus, the mounting system 4 can be readily adapted for use with a variety of differently sized and configured vests.

The slot 32 can be partially defined by a laterally extending cross member 33 of the base body 10, and the cross member 33 can extending between the first and second side portions of 20, 21 of the base body. For each mounting base 6A, 6B, the slot 32 and/or the cross member 33 can be configured to function as the lower attachment portion or part of the mounting base, for at least partially attaching the mounting base to the vest 2, as discussed in greater detail below.

In one illustrated embodiment, each mounting base 6A, 6B can have an angled or reduced profile front 37, a generally flat back or rear 38, and a bottom 39 that can be substantially flat or can be provided with a contoured surface to help seat the mounting bases when the vest 2 is worn by an animal. The angle of the front 37 may range, for example, from about 0 to 60 degrees, although other surface angles also can be used. Further, the bases 6A, 6B can be individually unique. For instance, the mounting bases 6A, 6B can be mirror images of each other or the bridge arm 12 of one base may pivot in a first direction, for instance, a vertical direction, while the bridge arm 12 of the other base may pivot in a second direction, for instance, a horizontal direction (see Fig. 2A), without departing from the disclosure.

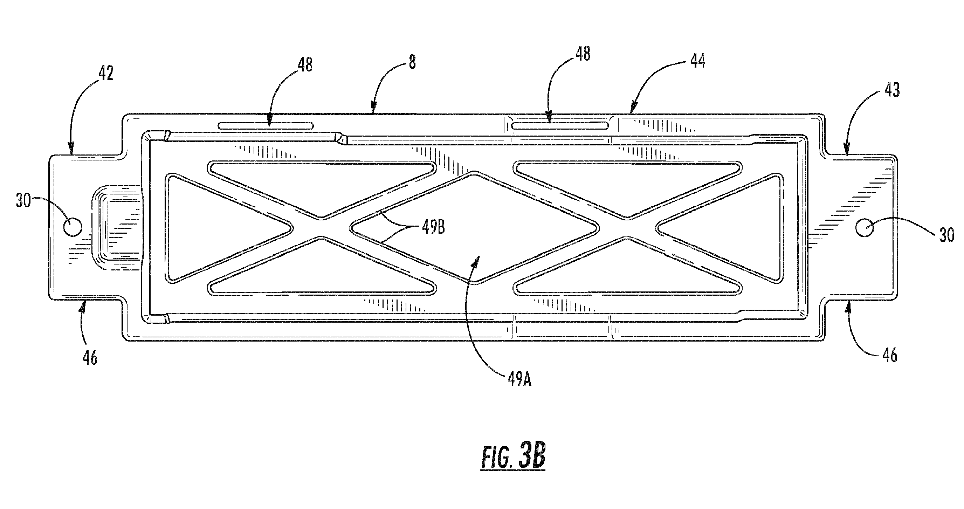

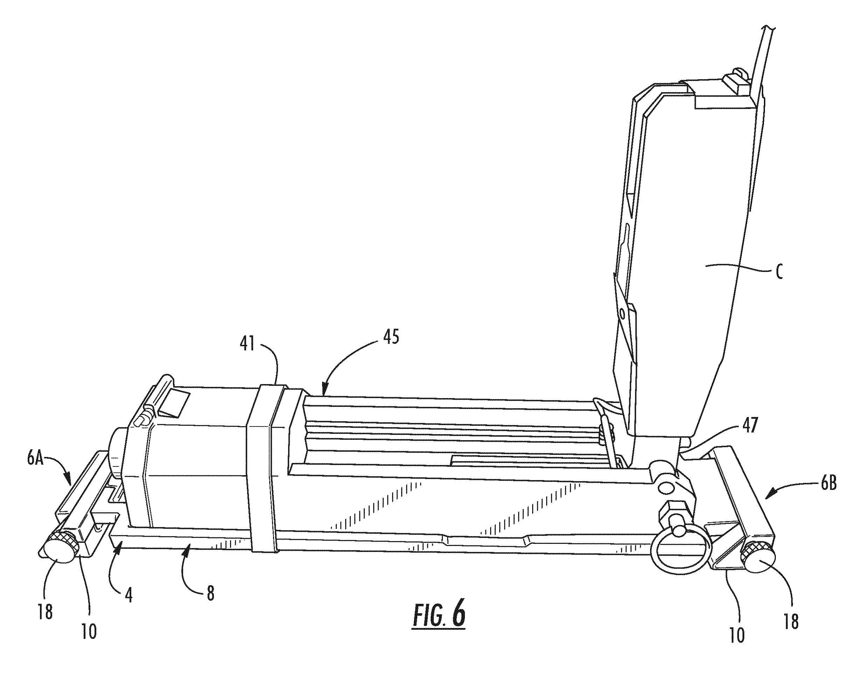

One exemplary embodiment of the mounting plate or platform 8 of the mount system 4 is illustrated in Figs. 2A, 2B and 3B. The mounting plate 8 comprises a first end portion 42, a second end portion 43 and a middle or center portion 44 between the first and second end portions 42, 43. Each of the first and second end portions 42, 43 can have or be in the form of an attachment portion 46 that can be configured to be at least part of a releasable connection with the respective mounting base 6A, 6B. For example, each attachment portion 46 can include a receiver aperture or recess 30 configured to mate with the respective post 26 or other suitable connector of the mounting bases 6A, 6B. The attachment portions 46 also may have a width less than the width of the center portions 22 (Fig. 3A) of the base bodies 10, so that the attachment portions 46 are configured for being received in the receptacles or gaps 29 (Fig. 3A) defined between upright portions or protrusions of the side portions 20, 21 of the base bodies 10. The receiver apertures or recesses 30 can be configured to facilitate the quick and accurate change-out of the mounting plate 8 by providing a guidance feature to align and indicate when the mounting plate 8 is in the proper position. As indicated in Fig. 3B, the center portion 44 of the mounting plate 8 also can be provided with a series of sidewise openings 48 which can be used to receive at least one mounting strap 41 (Figs. 1D and 6) or other connector to mount the camera C or other suitable device to the mounting plate and/or which can be used to further secure the mounting plate to the vest 2.

In the embodiment illustrated in Figs. 1D, 5 and 6, the camera C can be part of a camera system including a housing 45 to which an arm 47 is pivotably attached for supporting the camera C, and for allowing the camera to be pivoted into the housing when not in use. The housing 45 can be mounted to the mounting plate or platform 8 by at least one mounting strap 41 that extends around the housing 45 and mounting plate 8, and through at least one of the sidewise openings 48 of the mounting plate, or the like. In addition or alternatively, any other suitable connectors or fasteners may be used to mount the camera system to the mounting plate 8, or the mounting plate may be an integral part of the housing of the camera C or camera system, or the like. The camera system can further include batteries, a transmitter and antenna for transmitting video signals from the camera system to a remote receiver, and any other suitable features. Alternatively or in addition, the camera system may include a data storage device for recording the video signals, or any other suitable features. A wide variety of differently configured cameras C and camera systems are within the scope of this disclosure, as are a variety of mounting plates 8 which may include differently configured center portions, for respectively accommodating differently configured cameras C and camera systems, and/or other devices.

Referring to Figs. 2A, 2B and 3B, the center portion 44 of the mounting plate 8 also can be configured with a design or pattern having a series of openings 49A defined between cross pieces 49B. Such an open design can provide stability and rigidity to the mounting plate 8 while allowing air-flow to keep the camera C or camera system cool, and to keep heat away from the animal wearing the vest 2. The design and/or pattern of openings also can substantially reduce the weight of the mounting plate 8 and the amount of material included in the mounting plate 8 by providing a skeletonized plate structure. The central portion 44 of the mounting plate 8 also may be configured with a design selected or adapted to accommodate various camera systems C of different manufacturers which can have different housing profiles. Therefore, each mounting plate 8 can be unique to a predetermined camera C or camera system, or can be configured to accept a series of varying sizes or configurations of camera systems or other suitable devices.

At least partially reiterating from above and as one example, a camera C or camera system can be attached to the mounting plate or platform 8 using one or more straps, wherein the straps may include hook and loop fasteners or other suitable fasteners, and the straps can be woven or laced around and/or through the mounting plate and into corresponding strap mounts of the camera C or camera system. Each camera C or camera system can have attachment points that can be leveraged for each camera mounting plate 8 designed for each major manufacturer of cameras. The mounting plate 8 may remain attached to the camera C or camera system and be stored therewith so there will be no need to reattach the camera or camera system to the mounting plate after each and every use. Other attachment features, including releasable connectors such as snaps, clips, straps, belts or the like, or more permanent types of connections also can be used to connect cameras C or camera systems to mounting plates 8.

The components of the mounting system 4 further generally will be made from high-strength lightweight materials such as polymeric or other composite materials, or metals such as aluminum and aluminum alloys, titanium, etc. In one preferred embodiment, the mounting system can be made from aircraft grade aluminum.

As illustrated in Figs. 1A-1D, the vest 2 generally comprises a body 50 that can be formed of a lightweight, flexible and durable material that has sufficient strength to support the camera C (Fig. 1D) and other devices as well as that of an animal without tearing during use or lifting, but which substantially minimizes excess weight borne by the dog, canine, or other suitable animal, and also provides substantial freedom of movement. The body 50 is configured to extend around a main cavity 50A (Fig. 1A) configured to receive and/or fit about a substantial portion of the torso of the animal wearing the vest. For example, the vest 2 and/or components thereof can be made from a Trelleborg® brand coated fabric, or alternatively can be made from a Kevlar® brand or similar ballistic and/or cut-resistant fabric, Tweave materials, and/or combinations thereof. For example, Trelleborg® brand coated fabric typically does not hold water, and typically does not require sewn seams, seam tape, or the like, to prevent its cut edges from substantially unraveling, and thus, because the cut edges of the Trelleborg® material generally do not require seams, the vest 2 can be modified or cut to fit a canine in the field in real time.

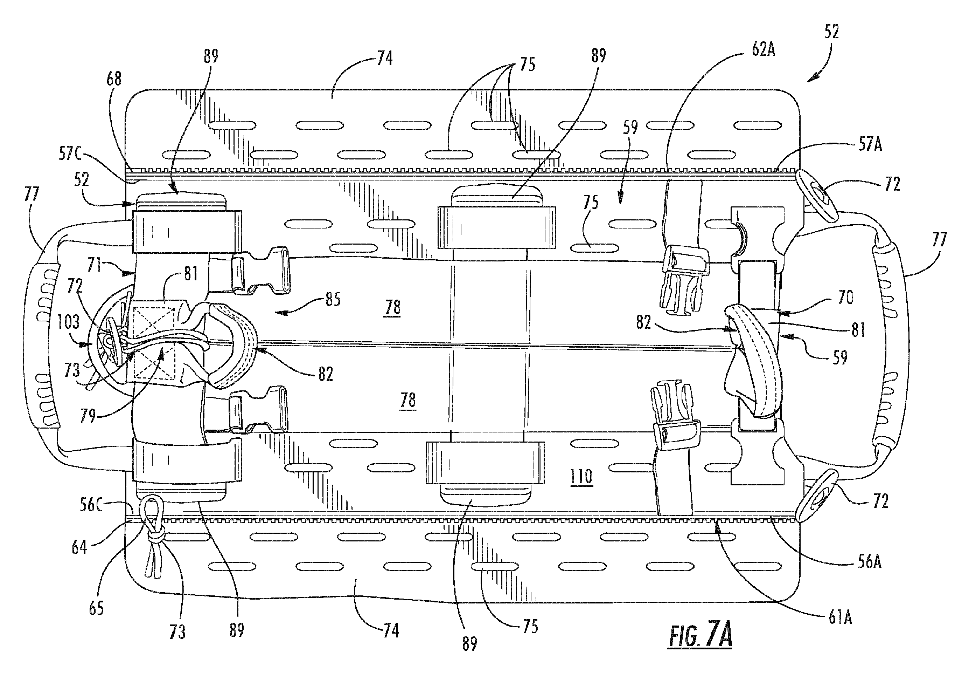

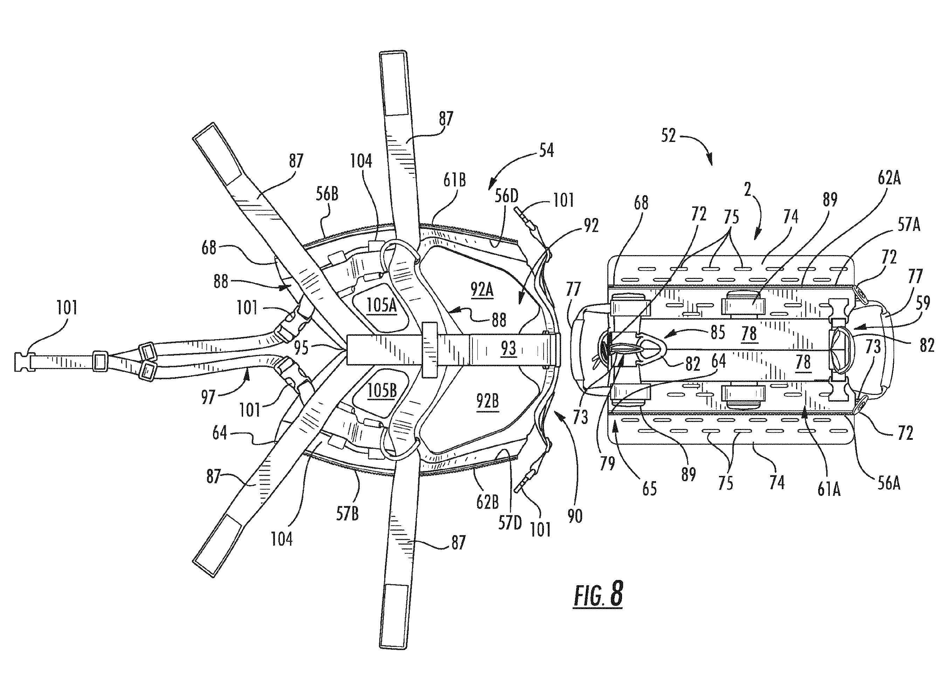

The body 50 typically will include a top or upper section 52, and a lower section or leg harness 54 removably attached to the upper section 52. The upper section 52 can be attached or connected to the leg harness 54 by one or more first and second connectors 56, 57, for example hook and loop fasteners (e.g., Velcro®), buttons, straps, zippers, or by any other suitable features. In the illustrated example embodiments of Figs. 7A and 8, the connectors 56, 57 can be zipper connectors 56, 57 that each include teeth 56A, 56B, 57A, 57B respectively mounting along edges of fabric strips 56C, 56D, 57C, 57D.

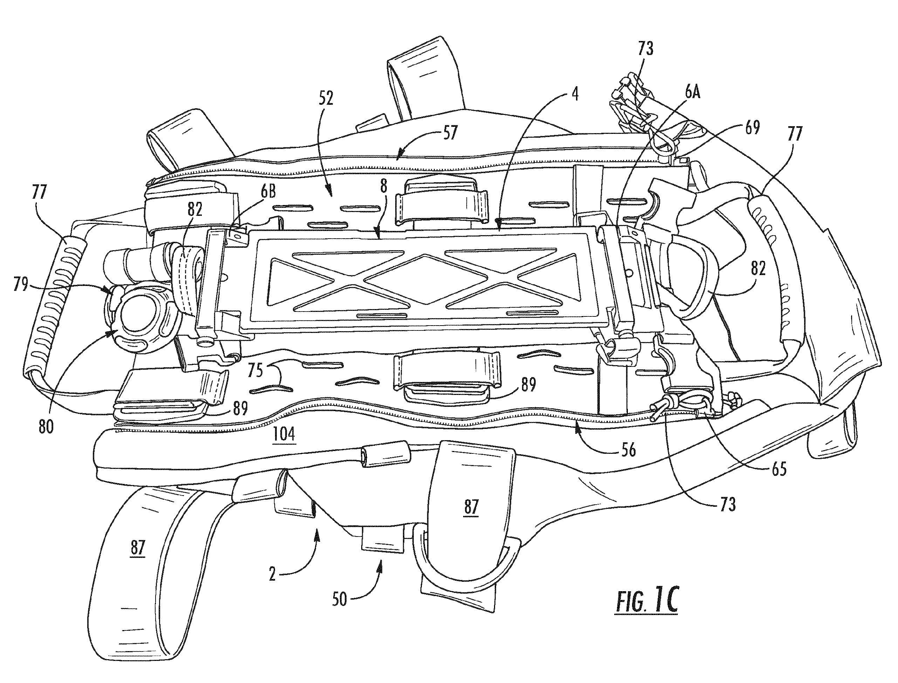

Referring to Figs. 7A and 8, the upper section 52 can have a center portion 59 with edges 61A, 62A that can include or be defined by the zipper teeth 56A, 57A respectively extending along the length of each of the edges 61A, 62A. The portion of the zipper connector 56 along the edge 61A can further include a zipper retaining box 64 and a pull tab or slider 65 (Fig. 1C) configured to mate with corresponding teeth 56B and zipper insert pin 68 of the portion of the zipper connector 56 of the lower section or leg harness 54. The portion of the zipper connector 57 along the edge 62A can further include a zipper insert pin 68 configured to mate with a corresponding zipper retaining box 64 and pull tab or slider 69 (Fig. 1C) of the leg harness 54.

The front 70 of the center portion 59 may comprise a T-bars 72 fastened to a base material or other suitable portion of the center portion. The sliders 65, 69 of the zippers 56, 57 may comprise, or have connected thereto, loops 73 (Fig. 1C) that are configured to respectively lock with the T-bars 72 to prevent the zipper sliders 65, 69 from unintentionally sliding backwards. Flaps 74 may also be attached to the center portion 59 along the edges 61A, 62A and below the zipper teeth 56A, 57A to prevent hair from obstructing the zippers 56, 57 when the leg harness 54 is attached to the upper section 52. The flaps 74 and the center portion 59 may have holes that function as air vents 75 throughout to allow air flow for ventilation. The air vents 75 can be cut into or through the vest 2 with a laser, a knife, or by any other suitable means. The zippers 56, 57 can be metal, plastic, or any other suitable material without departing from the disclosure.

The base material for each of the central portion 59 and flaps 74 likewise can be a flexible, durable polymeric coated fabric such as, but not limited to, Trelleborg® brand fabric, or alternatively Kevlar® brand fabric or other suitable, high-strength durable fabrics can be used. The polymeric coated fabric, or the like, of the central portion 59 and flaps 74 can be configured so that it does not require sewn seams, seam tape, or the like, to prevent its cut edges from substantially unraveling, such that the holes or air vents 75 can be defined by unseamed cut edges of the polymeric coated fabric, or the like. The flaps 74 and fabric strips 56C, 57D of the zippers 56, 57 can be connected to the base material of the central portion 59 by sewn seams and/or in any other suitable manner. Alternatively, the flaps 74 and the base material of the central portion 59 can be a single piece of material to which the fabric strips 56C, 57D of the zippers 56, 57 can be connected by sewn seams and/or in any other suitable manner.

The upper section 52 further can comprise tactical molded handles 77 with one handle attached to the front 70 and another handle attached to the rear 71 of the center portion 59. The tactical molded handles 77 can be used to quickly hoist or hold the animal wearing the vest 2. Like numerous other features of the upper section 52 of the vest, the molded handles 77, or straps extending therefrom, can be attached to the base material or another suitable portion of the central portion 59 by sewn seams, although any other suitable attachments or connections may also or alternatively be used. In the embodiment shown in Figs. 7A and 8, the center portion 59 can also include attachment strips 78 of hook and loop material, such as Velcro®, for attaching badges and other forms of identification to the vest 2. As illustrated in Fig. 1C, the upper section 52 can have a dedicated light sleeve 79 for holding a light 80 such as any suitable commercial light including the VIP® from Adventure Light or an IR Beacon. As shown in Fig. 8, the light sleeve 79 also can have a T-bar 72 and a loop 73 that mates with the T-bar 72 and further prevents the light 80 from detaching from the upper section 52.

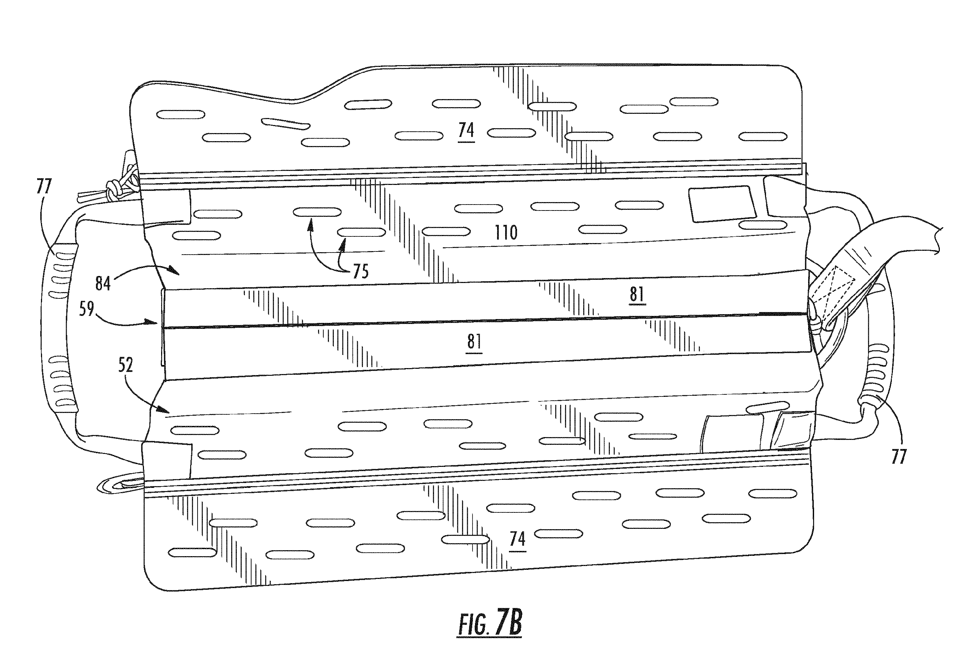

Additionally, one or more reinforcing strips or straps can be connected, such as by sewn seams, to the base material of the central portion 59. For example, at least one longitudinally extending reinforcement strap 81 (Figs. 1A, 7A, 7B and 10) can extend at least partially around and be connected to the base material of the central portion 59 by sewn seams and/or in any other suitable manner. In addition and as illustrated for example in Fig. 7A, opposite end sections of the reinforcement strap 81 can be configured as protruding hoisting loops 82. That is, the upper section 52 of the vest 2 can comprise hoisting loops 82. Each of the hoisting loops 82 can be configured to function as attachment point for having a fastener, such as a carabineer, attached thereto, such as for temporarily tethering a dog or other animal wearing the vest 2 to a soldier that is parachuting. The hoisting loops 82 can be proximate the front 70 and rear 71 of the upper section 52. The hoisting loops 82 can be formed from one continuous piece or strip of material that forms the reinforcement strap 81. The reinforcement strap 81 can be sewn along the bottom or interior 84 (Fig. 7B) and the top or exterior 85 (Fig. 7A), wherein at least some of the sewn seams connecting the reinforcement strap 81 to the base material of the central portion 59 are positioned near the front and rear portions of the upper section 52 of the vest 2.

As illustrated in Fig. 8, cinch or girth straps 87 can encircle the belly or torso of the dog or other animal to secure the vest 2 in place. The girth straps 87 attach at attachment locations 89 (Fig. 7A) on the sides of the exterior 85 of the vest 2. The attachment locations 89 may include cobra buckles, tension shackles, or any other suitable attachment features. In one embodiment, the girth straps 87 are attached or sewn onto the base material 88 (Fig. 8) of the leg harness or lower section 54 of the vest 2, and the girth straps extend transversely across the lower section. The girth straps 87 generally will be configured to connect to the upper section 52 at the attachment points 89.

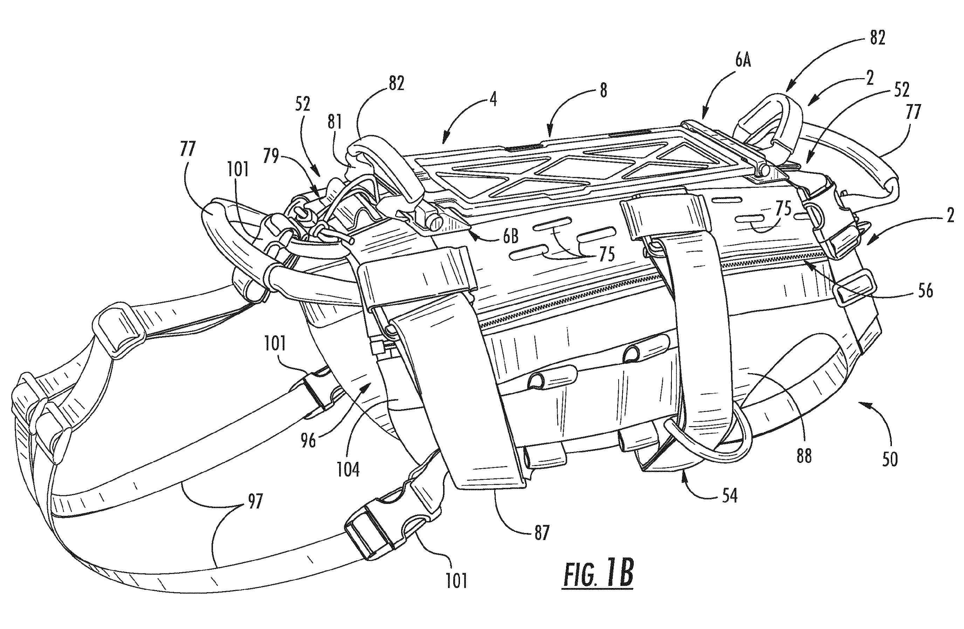

Referring to Fig. 1B, respective portions of the body 50 of the vest 2 can define a rear opening 96 to the cavity 50A within the vest. The rear opening 91 can be configured for having a rearward portion of the torso of the animal wearing the vest 2 extend therethrough. The rear opening can be partially obstructed by a rear strap 97. The rear strap can be connected to the leg harness 54 as shown in Figs. 1B and 8. The rear strap 97 may connect to the leg harness 54 at two attachment points, and the rear strap may also attach to the upper section 52, wherein these attachments or connections may comprise clips 101. These three attachment points of the rear strap 97 define a generally v-shaped strap for accommodating an animal's tail and preventing the vest 2 from detaching or sliding off of the animal.

The lower section or leg harness 54 can be sized and shaped to fit a particular sized canine or other animal. The leg harness 54 may, for instance, have three sizes, namely small, medium, and large, to accommodate most sized animals. Referring to Fig. 1A, the leg harness 54 of the vest 2 can have a padded chest section 90 for providing cushion when the animal is suspended from a rope, such as when an animal is fast roping out of a helicopter or other quick insertion points. Generally adjacent and above the chest section 90 can be a torso or front opening 91 to the cavity 50A within the body 50 of the vest 2. The front opening 91 can be defined by respective portions of the body 50 of the vest 2 and configured for having a forward portion (e.g., neck) of the torso of the animal wearing the vest extend therethrough.

Referring to Fig. 8, generally adjacent and rearward of the chest section 90 can be at least one forward lower opening 92 to the cavity 50A (Fig. 1A) within the body 50 of the vest 2. The forward lower opening 92 can be defined by the lower section 54 of the vest 2 and configured for having the front legs of the animal wearing the vest extend therethrough. The forward lower opening 92 can be divided into two sections or front leg openings 92A, 92B by a strap of material 93 attached along the center of the leg harness 54. The strap 93 can be sewn to the center 95 of the base material 88 of the leg harness 54, so that the strap 93 separates the leg harness into right and left sides which are substantially similar. The strap 93 can extend from the center 95, across the opening 92, and the strap 93 can be connected to the chest section 90 by a tension shackle or other attachment features such as hook and loop fasteners. As at least partially discussed above, the leg harness 54 has edges 61B, 62B having or defined by zipper teeth 56B, 57B configured to mate with corresponding teeth 56A, 56B along the edges 61A, 62A of the upper section 52.

In the embodiment illustrated in Figs. 1A-D and 8, a central portion of the base material 88 of the leg harness or lower section 54 of the vest 2 can be a polymeric coated fabric such as, but not limited to, Trelleborg® brand fabrics, or alternatively Kevlar® brand fabrics or other suitable high-strength durable fabrics may be used. The chest section 90 can also comprise the polymeric coated fabric. In some embodiments, the leg harness or lower section 54 can be configured with only minimal essential material included in its framework, so that the lower section can be substantially skeletonized, such as by including one or more secondary or rearward lower openings 105A, 105B (Figs. 1A and 8). The rearward lower openings 105A, 105B also allow for greater air flow for cooling purposes.

The forward and rearward lower openings 92, 105A, 105B can be at least partially cut into or through the base material 88 of the lower section 54 with a laser, a knife, or by any other suitable means. The polymeric coated fabric, or the like, of the base material 88 of the lower section can be configured so that its cut edges do not require sewn seams, seam tape, or the like, to prevent its cut edges from substantially unraveling, such that the openings 92, 105A, 105B can be defined by unseamed cut edges of the polymeric coated fabric, or the like. Accordingly and as at least alluded to above for one embodiment, because the cut edges of the base material 88 of the lower section 54 do not require seams, one or more of the openings 92, 105A, 105B can be readily enlarged by cutting the base material 88 in the field.

Referring to Fig. 8, the upper and/or lower sections 52, 54 can include one or more strips 104 of material having greater elasticity than the base material 88 of the lower section 54 and/or the fabric strips 56C, 57D of the zippers 56, 57, so that the vest 2 is configured for at least partially confirming to the shape of the animal wearing the vest. For example, the elastic strips 104 can be sewn into the sides of the lower section 54 to allow the lower section to have a flexible fit. The lower edge of each elastic strip 104 can be connected to a respective upper edge of the base material 88 of the lower section 54, such as by at least one sewn seam and/or in any other suitable manner. The upper edge of each elastic strip 104 can be connected to respective fabric strips 56D, 57D of the zippers 56, 57, such as by at least one sewn seam and/or in any other suitable manner. For example, the elastic strips 104 may comprise, consist essentially of, or consist of Tweave brand 4-way stretch fabric or any other suitable fabric.

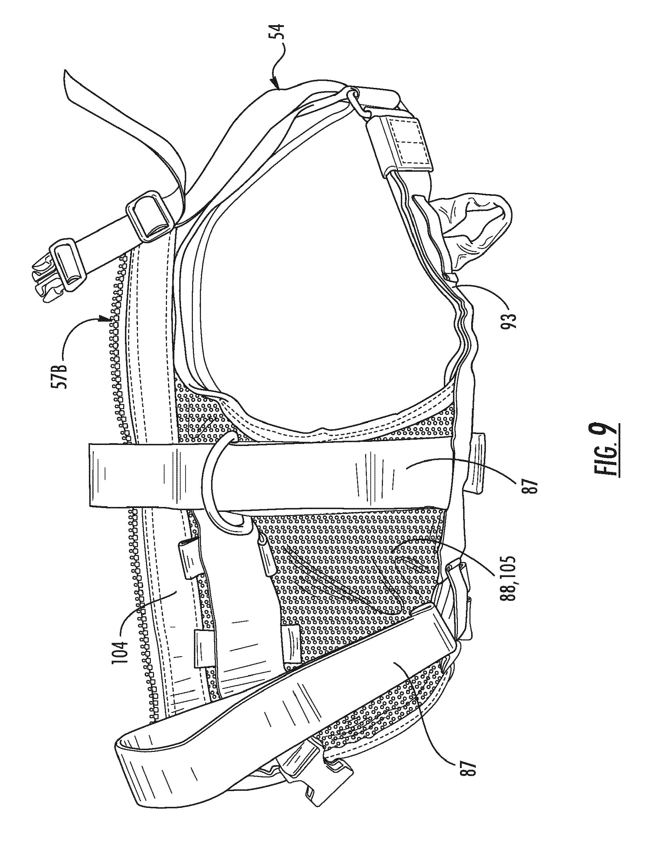

The vest 2 can be configured differently. For example, the secondary, rearward openings 105A, 105B can be alternatively arranged, sized, shaped, or omitted without departing from the scope of this disclosure. In another embodiment illustrated, for example, in Fig. 9, the base material 88 of the lower section 54 can be in the form of a mesh material 105 extending between the lower edges of the elastic strips 104, instead of the leg harness having the rearward or secondary openings 105A, 105B cut therein. The mesh 105 allows for air to flow therethrough, for helping to cool the animal wearing the vest 2.

Reiterating from above, the vest 2 can be used with or without the camera mount system 4. For example, Figs. 1A-1D illustrate an embodiment of the upper section 52 of the vest 2 that includes the mounting bases 6A, 6B, whereas Figs. 7A and 8 illustrate an embodiment of the upper section 52 of the vest 2 that does not include the mounting bases 6A, 6B.

In one exemplary method of preparing the vest 2 for use with the camera mount system 4, the mounting bases 6A, 6B generally can be attached to the upper section 52 of the vest 2 by permanently affixing the mounting bases 6A, 6B to the upper section. In accordance with another embodiment discussed below, the mounting bases 6A, 6B generally can be removably attached to the upper section 52 of the vest 2.

As will be discussed in greater detail in the following paragraph, in the embodiment in which the mounting bases 6A, 6B are substantially permanently mounted to the upper section 52 of the vest 2, the sections of the reinforcement strap 81 may respectively extend through the slots 32 in the mounting bases 6A, 6B, and the reinforcement strap can be fixedly mounted to the base material of the upper section 52 at each of the front and rear sides of the mounting bases. In one example, the reinforcement strap 81 can be 2 inch wide, type 7 or 8 mil-spec nylon. The reinforcement strap 81 can be fixedly mounted to the base material of the upper section 52 at each of the front and rear sides of the mounting bases with sewn seams in the form of 3 bar tack seams. The mounting bases 6A, 6B are appropriately spaced apart from one another to accommodate the length of the mounting plate or platform 8, as discussed in greater detail below.

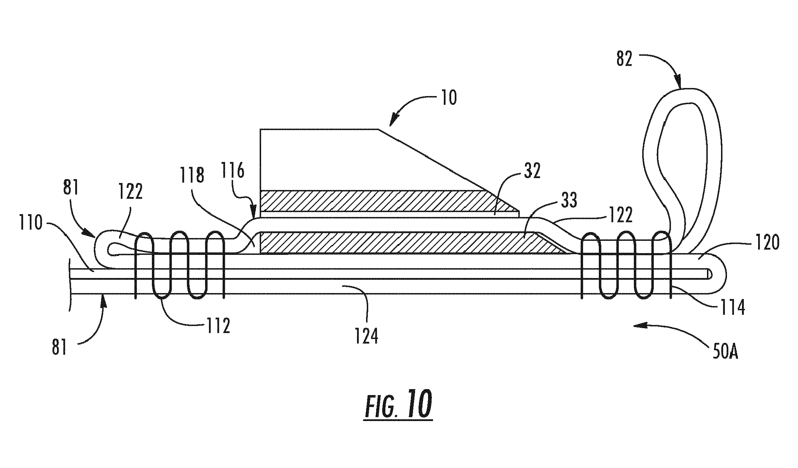

Referring for example to Fig. 10, a representative one of the base bodies 10 of the mounting bases 6A, 6B is cross-sectioned and shown mounted to the base material 110 of the upper section 52 of the vest 2. The base body 10 can be mounted by way of a length of the at least one mounting or reinforcement strap 81 and at least first and second connectors, wherein the first and second connectors may comprise first and second sewn seams 112, 114. The mounting strap 81 can be formed into a mounting loop 116 so that a mounting passageway 118 extends through the mounting loop. The mounting loop 116 can include inner and outer lengths 120, 122 of the mounting strap 81 that are configured so that the mounting passageway 118 extends therebetween. The mounting loop 116 can be positioned outside of the main cavity 50A of the vest 2, and the mounting strap 81 can extend from the mounting loop into the main cavity 50A so that an interior length 124 of the mounting strap is positioned in the main cavity 50A. At least the first and second sewn seams 112, 114 can respectively form connections between adjacent portions of the base material 110 and the inner, outer and interior lengths 120, 122, 124 of the mounting strap 81.

As shown in Fig. 10, the outer length 122 of the mounting strap 81 can extend through the slot 32, and the base's cross member 33 can extend through the mounting passageway 118, so that each of these features may be referred to as attachment parts, or the like. For example, for each mounting base 6A, 6B, the slot 32 and/or the cross member 33 can be configured to function as the lower attachment portion or part of the mounting base. Alternatively, the mounting loop 116 of the upper section 52 of the vest 2 can be replaced with any other suitable attachment portion, part or feature.

In preparation for an animal wearing a vest 2, an appropriately sized leg harness or lower section 54 corresponding to the size of the animal is obtained. Then, the front legs of the animal can be respectively inserted though the leg openings 92A, 92B. Then, the upper section 52 can be placed on top of the animal, and then the upper section 52 can be secured to the lower section 54 by the connectors such as the zippers 56, 57. Alternatively, the zipper parts (e.g., teeth) of one of the zippers 56, 57 can be connected to one another prior to inserting the front legs of the animal though the leg openings 92A, 92B, and thereafter the zipper parts (e.g., teeth) of the other of the zippers 56, 57 can be connected to one another. Then, the girth straps 87 can be looped though the attachment points 89, or other suitable features, and secured about the torso of the animal (e.g., a dog "D" in Fig. 1D) with fasteners such as, but not limited to, hook and loop fasteners, or any other suitable fasteners. Then the rear strap 97 can be connected to the upper and lower sections 52, 54 via clips 101 or any other suitable fasteners.

A camera C can be mounted to the mounting plate 8 before or after the mounting plate is mounted to the mounting bases 6A, 6B. In one specific example, the housing 45 of the camera system can be mounted to the mounted plate 8 by way of the mounting strap 41 and/or other suitable features before the mounting plate is mounted to the mounting bases 6A, 6B. Then, to attach the mounting plate 8 to the mounting bases 6A, 6B, for each mount the quick release pin 18 or other suitable locking mechanism is released and the bridge arm 12 is pivoted about the shoulder bolt 15 to open the bridge arm. The connector posts 26 of the mounting bases 6A, 6B are aligned and mate with the receiving holes 30 in the mounting plate 8. Then, for each of the mounting bases 6A, 6B, the bridge arm 12 is pivoted back into the closed position and the quick release pin 18 or other suitable locking mechanism engages in the hole 35 in the base body 10 to securely hold the mount plate 8 and bridge arm 12 in position.

In one example, if the animal or canine wearing the vest 2 becomes compromised, the upper section 52 (Fig. 1D) with the camera C can be removed and attached to a different canine with an appropriately sized harness or lower section 54. If the camera C is compromised or simply requires to be changed out, the camera system together with the mounting plate or platform 8 can easily be removed from the vest 2 by unlatching the locking mechanisms 18 and pivoting the bridge arms 12 to their open positions. Then another camera C or camera system can be mounted to an appropriate corresponding mounting plate 8 that can be installed to the respective mounting bases 6A, 6B.

Referring to Figs. 11A and 11B and in accordance with a second embodiment, the lower attachment part 33 (which is configured to be at least part of the connection between the mounting base bases 6A, 6B and the upper section 52 of the vest 2) can be a spring clip 33 or any other suitable type of clip. The spring clip 33 can be a bent piece of flexible metal plate having a generally or substantially planar central section 126 positioned between opposite bent margins, wherein one of the margins is an attachment margin 128 and the other margin is an entryway margin 130. The attachment margin 128 can include a section through which holes extend for receiving fasteners, such as screws 134, that extend into the bottom 39 of the base body 10 to mount the clip 33 to the base body 10. Alternatively, the spring clip 33 can be an integrally formed portion of the base body 10 and/or be mounted thereto in any other suitable manner. The entryway margin 130 can include an oblique section, wherein the spring clip 33 can be configured so that the oblique section is normally biased into contact with the bottom 39 of the base body 10, but can be pivoted away from the bottom 39 for providing access to the slot 32 defined between the central section 126 and the bottom 39.

In the second embodiment, the mounting bases 6A, 6B can be releasably mounted to the front and rear mounting loops 116 (Fig. 10) of the upper section 52 of the vest 2 by inserting the entryway margins 130 of the mounting bases through the mounting passageways 118 (Fig. 10) of the mounting loops 116, so that the outer length 122 (Fig. 10) of the mounting strap 81 extends through the slot 32 between the base body 10 and the central section 126 of the clip 33, and the clip 33 extends through the mounting passageway 118. Alternatively, the mounting bases 6A, 6B can be releasably mounted to the upper section 52 of the vest 2 by clipping the attachment clip 33 to any other suitable structure of the upper section.

The foregoing description generally illustrates and describes various embodiments of the present invention. It will, however, be understood by those skilled in the art that various changes and modifications can be made to the above-discussed construction of the present invention without departing from the spirit and scope of the invention as disclosed herein, and that it is intended that all matter contained in the above description or shown in the accompanying drawings shall be interpreted as being illustrative, and not to be taken in a limiting sense. Furthermore, the scope of the present disclosure shall be construed to cover various modifications, combinations, additions, alterations, etc., above and to the above-described embodiments, which shall be considered to be within the scope of the present invention. Accordingly, various features and characteristics of the present invention as discussed herein may be selectively interchanged and applied to other illustrated and non-illustrated embodiments of the invention, and numerous variations, modifications, and additions further can be made thereto without departing from the spirit and scope of the present invention as set forth in the appended claims.

## Claims

1. A canine vest, comprising:
a body of a flexible material and configured to receive at least a portion of a torso of a canine;
the body including an upper section having a first side portion and a second side portion, and configured to receive a forward portion of the canine therethrough, and a lower section having a first side portion and a second side portion defining at least one lower opening configured to receive one or more legs of the canine therethrough, the upper and lower sections of the body defining opposite front and rear openings, wherein the rear opening is configured to receive a rear portion of the canine therethrough;
a first connector configured to connect the first side portion of the upper section to the first side portion of the lower section; and
a second connector configured to connect the second side portion of the upper section to the second side portion of the lower section.

2. The canine vest of claim 1, further comprising a mounting system located along the upper section and comprising:
a base comprising a base body having first and second side portions defining a gap therebetween;
an arm having first and second end portions, the first end portion being pivotably mounted to the first side portion of the base body so that the arm is pivotable between an open position and a closed position with respect to the base body, wherein in the closed position the arm extends across the gap, and wherein the arm and the base body are cooperatively configured to at least partially engage an article received therebetween; and
a releasable locking mechanism configured to secure the second end portion of the arm to the second side portion of the base body when the arm is in the closed position.

3. The canine vest of claim 2, wherein the base comprises at least one slot configured to receive a strap for connection of the base to the upper section, wherein the slot is at least partially defined by a clip and/or a cross member.

4. The canine vest of claim 1, further comprising a mounting system comprising:
at least one mounting base comprising an attachment part configured to be part of a connection between the least one mounting base and the upper section, and an arm extending at least partially across a body of the least one mounting base; and
a mounting plate configured to receive and support a selected device in a desired orientation along the vest, the mounting plate being adapted to engage and mate with the at least one mounting base;
wherein the arm is movable between an open position and a closed position, wherein in the closed position, the arm engages the mounting plate against the at least one mounting base so as to substantially secure the mounting plate against dislocation from its mating engagement with the at least one mounting base.

5. The canine vest of claim 4, wherein:
the body of the at least one mounting base comprises a first side portion, and a second side portion;
the arm of the at least one mounting base is pivotally connected to the body of the at least one mounting base; and
the mounting system includes a releasable locking mechanism configured to secure the arm to the second side portion of the base of the at least one mounting base when the arm is in its closed position.

6. The canine vest of claim 5, wherein:
the at least one mounting base comprises a first mounting base and a second mounting base;
the mounting plate has opposite first and second end portions;
the first end portion of the mounting plate is adapted to engage and mate with the first mounting base; and
the second end portion of the mounting plate is adapted to engage and mate with the second mounting base.

7. The canine vest of claim 1, further comprising a mounting system comprising:
a mounting platform having opposite end portions configured to couple forward and rearward mounting bases, respectively, thereto, each of the mounting bases including spaced first and second side portions defining a recess area therebetween; and
an arm having opposite first and second end portions, the first end portion being hingedly mounted to the first side portion of at least one of the forward and rearward mounting bases so that the arm is pivotable between an open position and a closed position, in which the arm extends across the recess area defined between the first and second side portions of the at least one of the forward and rearward mounting bases, wherein the arm and the recess area of the at least one of the forward and rearward mounting bases are cooperatively configured to receive and at least partially secure the mounting platform to the at least one of the forward and rearward mounting bases; and
a releasable locking mechanism configured to secure the second end portion of the arm to the second side portion of the at least one of the forward and rearward mounting bases when the arm is in the closed position.

8. The canine vest of claim 7, wherein:
the forward mounting base comprises an attachment part extending at least partially into an attachment passageway of a forward attachment part of the upper section of the canine vest; and
the rear mounting base comprises an attachment part extending at least partially into an attachment passageway of a rearward attachment part of the upper section of the canine vest.

9. The canine vest of any preceding claim, wherein:
at least one section selected from the group consisting of the upper section and the lower section comprises first and second pieces of fabric that each extend in a lengthwise direction of the canine vest, and a lengthwise connection between the first and second pieces of fabric; and
the second piece of fabric has greater elasticity than the first piece of fabric.

10. The canine vest of claim 9, wherein:
the lower section comprises the first and second pieces of fabric, and the lengthwise connection between the first and second pieces of fabric;
the lengthwise connection between the first and second pieces of fabric comprises a seam;
the lower section further comprises a third piece of fabric extending in the lengthwise direction, with a lengthwise connection defined between the first and third pieces of fabric; and
the third piece of fabric has greater elasticity than the first piece of fabric.

11. The canine vest of claim 10, wherein:
the first connector comprises a zipper connected to the second piece of fabric by a seam; and
the second connector comprises a zipper connected to the third piece of fabric by a seam.

12. The canine vest of any preceding claim, further comprising a first loop, a first T-bar, a second loop and a second T-bar, wherein:
the first connector comprises a first zipper, and the first loop is configured to mate with the first T-bar to restrict the first zipper from unzipping; and
the second connector comprises a second zipper, and the second loop is configured to mate with the second T-bar to restrict the second zipper from unzipping.

13. The canine vest of any preceding claim, wherein the flexible material comprises a polymeric coated fabric having an unseamed cut edge.

14. The canine vest of claim 13, wherein the lower section defines a rearward lower opening positioned between the rear opening and the at least one lower opening, and the rearward lower opening is at least partially defined by the unseamed cut edge, so that the unseamed cut edge extends at least partially around the rearward lower opening.

15. The canine vest of any preceding claim, further comprising first and second flaps, wherein:
the first connector comprises a first zipper, and the first flap is configured to substantially prevent obstruction of the first zipper when the lower section is attached to the upper section with the first zipper; and
the second connector comprises a second zipper, and the second flap is configured to substantially prevent obstruction of the second zipper when the lower section is attached to the upper section with the second zipper.
